# EUROPEAN PATENT SPECIFICATION

(11) **EP 3 144 178 B1**
(45) Date of publication and mention of the grant of the patent: **17.06.2020**
(21) Application number: 15793086.8
(22) Date of filing: 23.04.2015
(51) Int. Cl.: B60N 2/28, A47C 3/18, B60N 2/14

(54) **CHILD SEAT**
KINDERSITZ
SIÈGE POUR ENFANT

(30) Priority: 14.05.2014 JP 2014100273
(43) Date of publication of application: 22.03.2017
(73) Proprietor: Car Mate Mfg. Co., Ltd., Toshima-ku Tokyo 171-0051 (JP)
(72) Inventor: TAMURA, Naoyuki, Tokyo 171-0051 (JP)
(74) Representative: Beetz & Partner mbB
(86) International application number: PCT/JP2015/062343
(87) International publication number: WO 2015/174237

(56) References cited:
- EP-A1- 0 853 018
- EP-A1- 2 295 287
- JP-A- 2004 504 218
- JP-A- 2005 193 775
- US-A1- 2014 084 650

## Description

### TECHNICAL FIELD

The present invention relates to a child seat and, especially, relates to a child seat that includes a rotation mechanism to rotate a sitting seat with respect to a mounting base installed on a vehicle.

### BACKGROUND ART

Various child seats that include a sitting seat configured to be rotatable with respect to a mounting base on a vehicle. Relating to a rotation mechanism between the mounting base and the sitting seat, the type is roughly divided into a type where an operating unit, for locking the sitting seat to stop the rotation and releasing the lock to allow to rotate, is disposed on the base side, and a type where the operating unit is disposed on the sitting seat side.

The former is a child seat, for example, with a configuration disclosed in Patent Document 1. The child seat with such configuration has an advantage such that the operating unit can be operated from a constantly identical direction regardless of the direction that the sitting seat faces with respect to a traveling direction of the vehicle.

As the latter, child seats, for example, with configurations disclosed in Patent Documents 2 and 3 have been known. The child seat disclosed in Patent Document 2 includes the operating unit on a lower side of a seating portion of the sitting seat. Conversely, the child seat disclosed in Patent Document 3 includes the operating unit backward a backrest portion of the sitting seat. In any configuration, since the release of the rotation lock and a rotating operation can be simultaneously performed, operations can be performed in one hand, and there is an advantage where the operations can be performed in a state of holding a child.

### PRIOR ART DOCUMENTS

### Patent Documents

Patent Document 1: Japanese Unexamined Patent Application Publication No. 2001-180349
Patent Document 2: Japanese Unexamined Patent Application Publication No. 2002-301961
Patent Document 3: Japanese Unexamined Patent Application Publication No. 2012-30625

Besides the above documents, EP 2295287 also discloses a fixing base for a child car seat, which has a sliding platform moving in translation relative to a main casing between two positions. In this device, a ring is mounted to freely rotate on a platform, and a connecting rod has ends respectively connected with the casing and the ring and configured such that the translatable movement of the platform rotates the ring.

### SUMMARY OF THE INVENTION

### PROBLEMS TO BE SOLVED BY THE INVENTION

As described above, the child seat including the operating unit on the base side and the child seat including the operating unit on the sitting seat side have the advantages specialized in the respective configurations. Conversely, the child seats with the respective configurations have problems specialized by the respective configurations.

For example, in the case where the operating unit is disposed on the base side, there is no choice but to use both hands when the operation to release the rotation lock and the operation to rotate the sitting seat is simultaneously performed, and it is difficult to perform the operations in a state of holding a child.

In the case where the operating unit is disposed on the sitting seat side, rotating the sitting seat changes a position of the operating unit. Accordingly, when the operating unit is positioned on the backrest side of the vehicle seat, problems such as a difficulty in checking hands and a difficulty in applying a force for unlocking possibly occur.

Then, the object of the present invention is to provide a child seat with a rotation mechanism that ensures releasing a rotation lock and performing a rotating operation in one hand, and positions an operating unit on a position for easy operation even if a sitting seat faces any direction.

### SOLUTION TO PROBLEM

The above object is achieved by the features of claim 1.

A child seat according to the present invention for achieving the above object includes a mounting base and a sitting seat. A rotating base is attached to the mounting base and includes a circumferential path and a depressed portion disposed on at least a part of the circumferential path. The sitting seat includes a plurality of operating units. The plurality of operating units include: a locking unit configured to move along the circumferential path and fit to the depressed portion, a biasing unit biasing the locking unit to a side of a surface forming the depressed portion, and an unlocking unit coupled to the locking unit. The unlocking unit moves the locking unit to an opposite side of the biasing direction by the biasing unit to release the fitting of the locking unit and the depressed portion. A rotating plate is attached to the sitting seat. The rotating plate is rotatably assembled with respect to the rotating base.

In the child seat with the above-described feature, preferably, the depressed portion is disposed on a position corresponding to a front side of the mounting base on the circumferential path, and the plurality of the operating units are disposed on at least a position corresponding to a front side and a position corresponding to a rear side of the sitting seat.

With such feature, in a state where a rotating movement of the sitting seat is locked, the operating unit always positions on the front side of the mounting base.

In the child seat with the above-described feature, preferably, a plurality of the depressed portions are radially disposed with a rotational center of the rotating plate as a base point, and an arrangement angle between the plurality of the depressed portions with the rotational center as the base point is smaller than an arrangement angle of the operating units with the rotational center as the base point.

Such feature ensures locking the rotation of the sitting seat on any position. Such feature also removes the possibility for locking the rotation by one operating unit during the other operating unit releases the rotation lock to perform the rotating operation.

Furthermore, in the child seat with the above-described feature, preferably, the circumferential path includes a wall surface on which a cutout portion to vary a sliding resistance of the locking unit is disposed.

Such feature ensures the cutout portion to temporarily lock the rotation of the sitting seat. Furthermore, in the temporary locking state, only applying a force ensures performing the rotating movement.

### ADVANTAGEOUS EFFECTS OF INVENTION

According to the child seat with the above-described features, a child seat including a rotation mechanism ensures releasing a rotation lock and performing a rotating operation in one hand, and ensures positioning operating units on a position for easy operation even if a sitting seat faces any direction.

### BRIEF DESCRIPTION OF DRAWINGS

FIG. 1 is a perspective view illustrating a configuration of a front, a plane, and a right side of a child seat according to an embodiment.
FIG. 2 is a drawing illustrating the configuration of the right side of the child seat according to the embodiment.
FIG. 3 is a drawing illustrating a configuration of a cross section taken along a line A-A in FIG. 2.
FIG. 4 is a drawing illustrating a configuration of a cross section taken along a line B-B in FIG. 2.
FIG. 5 is a drawing illustrating a configuration of a cross section taken along a line C-C in FIG. 3.
FIG. 6 is a drawing illustrating a plane configuration of a mounting base.
FIG. 7 is a drawing illustrating a plane configuration of a rotating plate.
FIG. 8 is a drawing illustrating a configuration viewed from a direction of an arrow D in FIG. 7.
FIG. 9 is a drawing illustrating a configuration viewed from a direction of an arrow E in FIG. 7.
FIG. 10 is a schematic diagram illustrating a distinctive configuration of a first application form of the child seat according to the embodiment.
FIG. 11 is a schematic diagram illustrating a distinctive configuration of a second application form of the child seat according to the embodiment.
FIG. 12 is a schematic diagram illustrating a distinctive configuration of a third application form of the child seat according to the embodiment.
FIG. 13 is a schematic diagram illustrating a distinctive configuration of a fourth application form of the child seat according to the embodiment.
FIG. 14 is a schematic diagram illustrating a distinctive configuration of a fifth application form of the child seat according to the embodiment.
FIG. 15 is a schematic diagram illustrating a configuration of a cross section taken along a line F-F in FIG. 14.
FIG. 16 is a cross-sectional view illustrating a distinctive configuration of a sixth application form of the child seat according to the embodiment.

### DESCRIPTION OF EMBODIMENTS

The following describes embodiments according to a child seat of the present invention in detail with reference to the drawings.

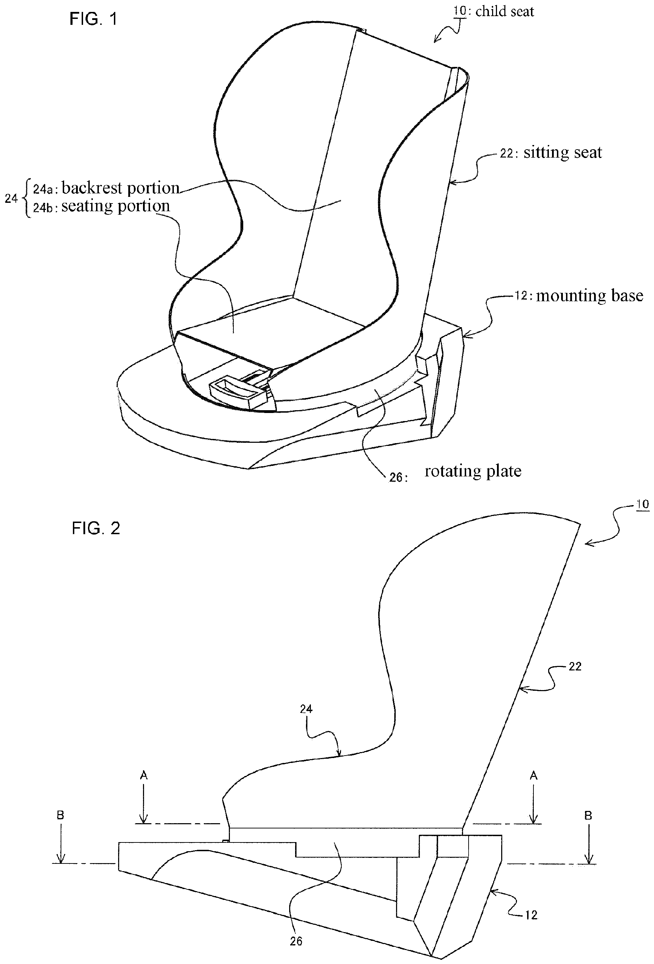

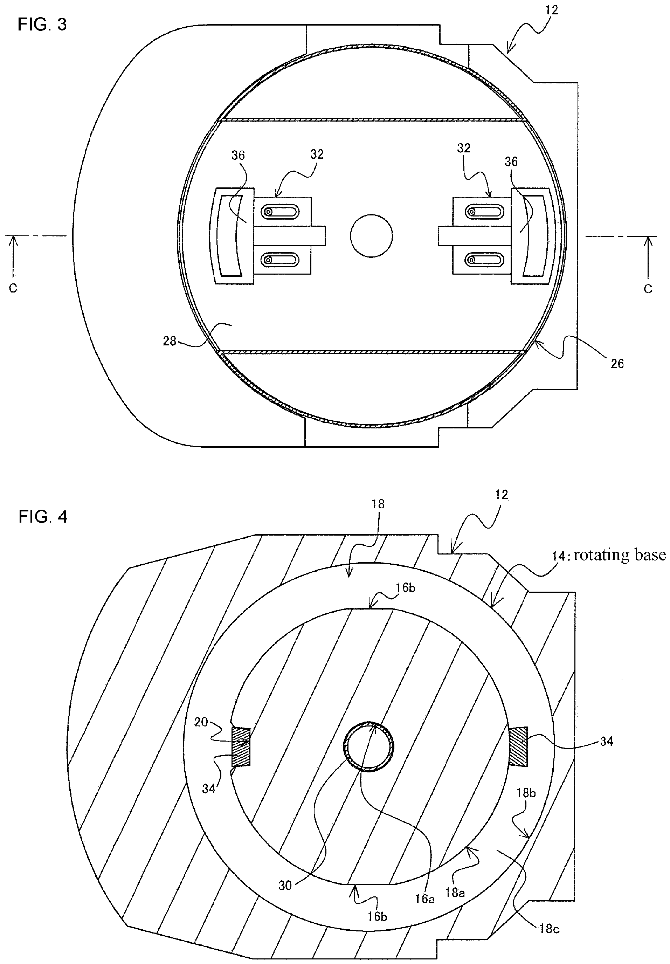

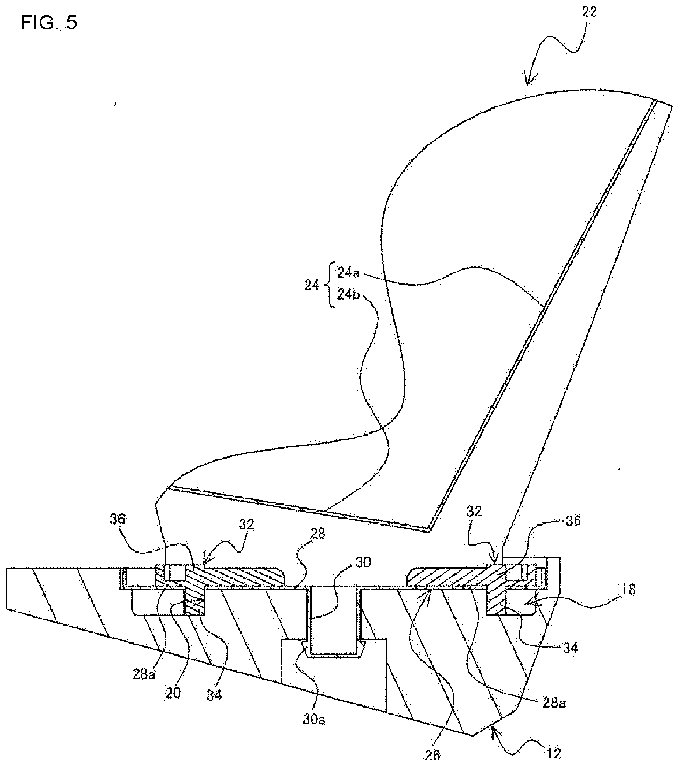

A child seat 10 according to the embodiment is configured, as illustrated in FIG. 1 and FIG. 2, to include a mounting base 12 and a sitting seat 22 as main bodies. FIG. 1 is a perspective view illustrating a configuration of a front, a plane, and a right side of the child seat according to the embodiment, and FIG. 2 is a drawing illustrating the configuration of the right side of the child seat according to the embodiment. FIG. 3 illustrates a cross section taken along a line A-A in FIG. 2, and FIG. 4 illustrates a cross section taken along a line B-B in FIG. 2. Furthermore, FIG. 5 illustrates a cross section taken along a line C-C in FIG. 3.

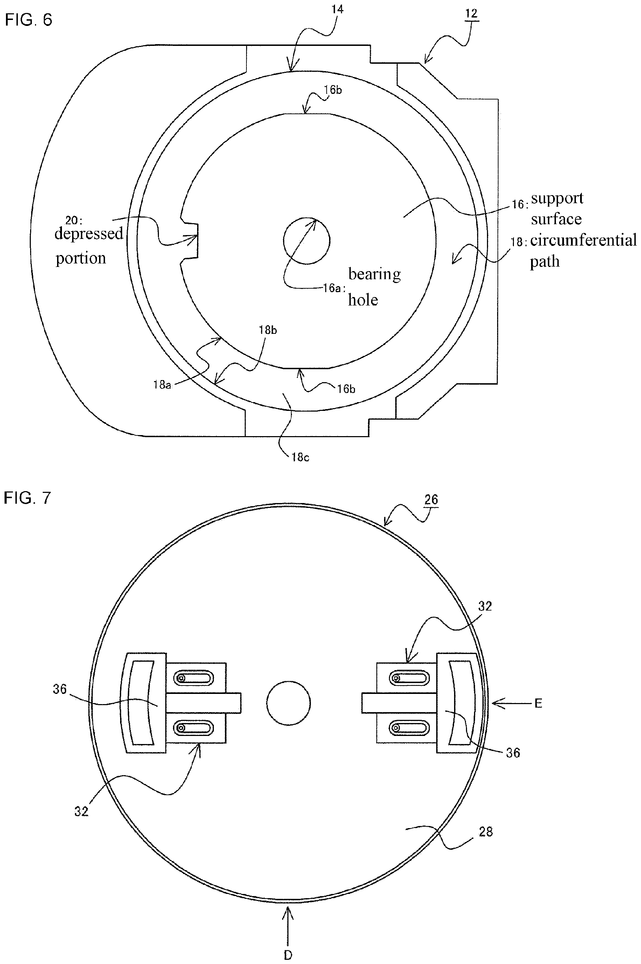

In the child seat 10 according to the embodiment, the mounting base 12 is a member secured to a vehicular sheet (not illustrated) and includes a base (referred to as a rotating base 14) in a rotation mechanism for rotating the sitting seat 22. FIG. 6 is a plan view of the mounting base 12 (an angle having a state of FIG. 2 as a basic).

The rotating base 14 is configured to include a support surface 16, a circumferential path 18, and a depressed portion 20 as basics. The support surface 16 is a surface for supporting a weight of the sitting seat 22 that includes a rotating plate 26, which detail is described later (see FIG. 5), and in the configuration illustrated in FIG. 6, a planar shape of the support surface 16 is an approximately circular shape. The support surface 16 includes a bearing hole 16a through which a rotation shaft 30, which is included on the rotating plate 26, is inserted on the center. The circumferential path 18 is a path for a locking unit 34 (see FIG. 5), which projects to a lower portion side of the rotating plate 26 described later in detail, to revolve. In this embodiment, the circumferential path 18 is disposed along an outer periphery shape of the support surface 16. The circumferential path 18 is formed so as to be a groove in a depressed shape with respect to the support surface 16 because the locking unit 34 projecting from the rotating plate 26, mounted on the support surface 16, is disposed. Accordingly, the circumferential path 18 is constituted of three wall surfaces of an inner peripheral side wall surface 18a, an outer peripheral side wall surface 18b, and a bottom surface 18c.

In this embodiment, the depressed portion 20 is configured to be disposed on the circumferential path 18. Specifically, the depressed portion 20 is disposed on the inner peripheral side wall surface 18a among the wall surfaces constituting the circumferential path 18. The depressed portion 20 is disposed on a position corresponding to the front of the mounting base 12 (front side) on the rotating base 14. In this embodiment, as indicated in FIG. 6, cutout portions 16b, which notch a part of the plan view form of the approximately circular-shaped support surface 16 in a straight line, are disposed on a position that is a part of the inner peripheral side wall surface 18a and corresponds to the side surface of the mounting base 12 separately from the above-described depressed portion 20.

The locking unit 34, which is included on the rotating plate 26 described later in detail, is configured to be biased with respect to the inner peripheral side wall surface 18a constituting the depressed portion 20. Accordingly, when the locking unit 34 moving on the circumferential path 18 comes to the position where the depressed portion 20 is formed, the locking unit 34 is pulled and fitted to the depressed portion 20 formed on the inner peripheral side wall surface 18a. When the locking unit 34 comes to the cutout portion 16b, since a corner portion is formed between the cutout portion 16b and an arc-shaped portion, a sliding resistance varies when the locking unit 34 goes over the corner portion to require a large force. Then, disposing the cutout portion 16b provides a temporary locking action when the rotating plate 26 is rotated.

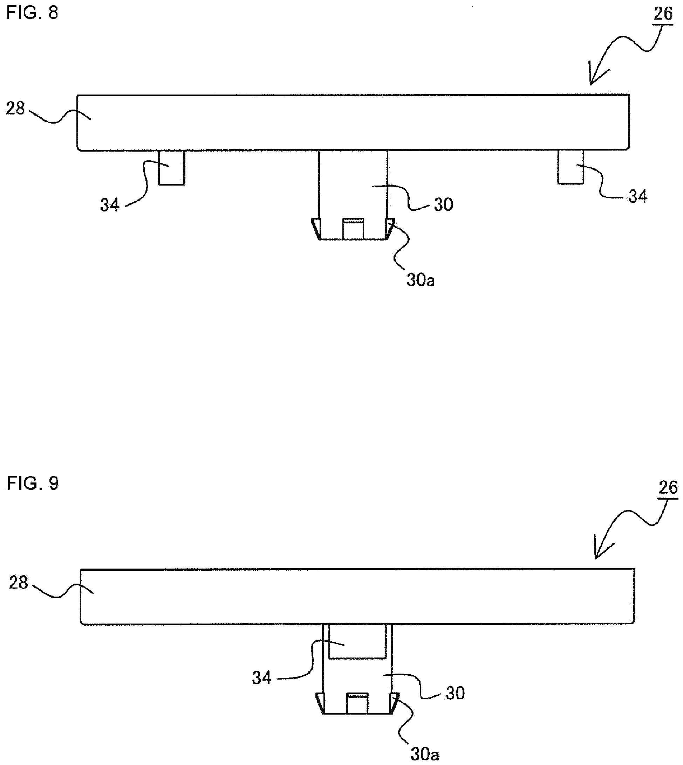

The sitting seat 22 includes a sheet body 24 including a backrest portion 24a and a seating portion 24b, and the rotating plate 26 disposed on a lower portion of the seating portion 24b constituting the sheet body 24. Here, FIG. 7 illustrates a plan view of the rotating plate, and FIG. 8 and FIG. 9 respectively illustrate configurations viewed from directions of arrows D and E in FIG. 7.

The sheet body 24 is a seat where a child to use the child seat 10 is seated. The rotating plate 26 includes a plate body 28, the rotation shaft 30, and an operating unit 32. The plate body 28 slides while one surface of the plate body 28 is brought in contact with the support surface 16 of the above-described rotating base 14, and at the same time, plays a role to support the sheet body 24 by the other surface. On one surface side of the plate body 28, the rotation shaft 30 is disposed to protrude. The rotation shaft 30 is inserted into the bearing hole 16a formed on the support surface 16 of the rotating base 14. In the cases illustrated in FIG. 8 and FIG. 9, the rotation shaft 30 includes a retainer 30a, which plays a role in engaging the rotation shaft 30 with the bearing hole 16a, on a distal end. The retaining structure of the rotation shaft 30 to the bearing hole 16a is not limited to this embodiment, and the other existing retaining structures may be employed. The plate body 28 includes a plate surface where openings 28a (see FIG. 5) for disposing the operating unit 32, described later in detail, are disposed.

The operating unit 32 includes the locking unit 34 and an unlocking unit 36 continuously connected to the locking unit 34. While the operating unit 32 is disposed on the other surface of the plate body 28, the locking unit 34 is disposed to project to the one surface side of the plate body 28 via the opening 28a. This disposes the locking unit 34 and the unlocking unit 36 respectively on the one surface and the other surface via the plate body 28. In this embodiment, the plate body 28 is formed in a circular shape, and the opening 28a disposed on the plate body 28 is configured to move the operating unit 32 in a radial direction in a state where the locking unit 34 is disposed. It is enough for the operating unit 32 to have a move width in a range at least from a position where the locking unit 34 fits to the depressed portion 20 formed on the rotating base 14 to a position where the fitting of the locking unit 34 and the depressed portion 20 is released to arrange the locking unit 34 on the circumferential path 18.

The operating unit 32 is biased to a center side of the plate body 28 by a biasing unit (not illustrated). This causes the locking unit 34 to be in a state of always being biased to the inner peripheral side wall surface 18a of the circumferential path 18. Accordingly, when the locking unit 34 faces an arrangement position of the depressed portion 20, the locking unit 34 automatically fits to the depressed portion 20.

It is enough for the locking unit 34 to be a protrusion configured to fit to the depressed portion 20. On the other hand, the unlocking unit 36 is required to pull out the locking unit 34 from the depressed portion 20 against the biasing force. Then, in this embodiment, the unlocking unit 36 is configured to include a handle for putting fingers.

The child seat 10 according to the embodiment is configured to include at least two operating units 32 on the plate body 28. As specific arrangement positions, a position in the front side of the seating portion 24b and a position in the backrest portion 24a side of the seating portion 24b in a state where the sheet body 24 is mounted on the rotating plate 26 are preferable. This arrangement positions the operating unit 32 forward the mounting base 12 even in a case where the front of the seating portion 24b faces the front of the mounting base 12, or even in a case where the backrest portion 24a positions forward the mounting base 12 to keep the operability proper.

In the child seat 10 configured such that the sitting seat 22 with the above-described configuration is assembled to the mounting base 12 with the above-described configuration, the locking unit 34 of the operating unit 32 lying in the front side of the mounting base 12 fits to the depressed portion 20 disposed on the rotating base 14. Accordingly, pulling the unlocking unit 36 of the operating unit 32 lying in the front side of the mounting base 12 in the front side releases the fitting of the locking unit 34 and the depressed portion 20 to release the lock related to the rotating movement. In a state where the lock is released, applying a force in a direction to rotate the sitting seat 22 rotates the sitting seat 22 with the rotation shaft 30 as a base point. In the child seat 10 according to the embodiment, since the operating unit 32 is attached to the sitting seat 22, both the release of the rotation lock and the rotating movement can be performed in one hand. This ensures releasing the lock of the child seat 10 to perform an operation to rotate the child seat 10 even in a state of holding a child and a baggage in one hand.

The locking unit 34 released from the fitting to the depressed portion 20 slides along the inner peripheral side wall surface 18a of the circumferential path 18 in accordance with the rotation of the sitting seat 22. Rotating the sitting seat 22 by approximately 90 degrees causes the locking unit 34 to reach the cutout portion 16b formed on the inner peripheral side wall surface 18a of the circumferential path 18 to be in a temporary locked state. Applying a force to the sitting seat 22 in the rotation direction releases the temporary locked state to cause the locking unit 34 to slide along the inner peripheral side wall surface 18a of the circumferential path 18 again.

Rotating the sitting seat 22 by approximately 180 degrees positions the operating unit 32 disposed on the backrest portion 24a side forward the mounting base 12. This fits the locking unit 34 of the operating unit 32 in the backrest portion 24a side to the depressed portion 20 to lock the rotation of the sitting seat 22. Thus, in the child seat 10 according to the embodiment, the operating unit 32, which functions to lock the rotation of the sitting seat 22, always positions in the front side of the mounting base 12 when the rotation of the sitting seat 22 is locked. This constantly provides an excellent operability in releasing the lock. While in this embodiment, the arrangement position of the depressed portion 20 is a position in the front side of the mounting base 12, the arrangement position of the depressed portion 20 is not limited to this. That is, the arrangement position of the depressed portion 20 may be determined in accordance with the operability of the operating unit 32 and the direction desired to fix the sitting seat 22. The arrangement range of the depressed portion 20 is preferably in a range of ±90 degrees around the rotational center with the front side of the mounting base 12 as the base point.

Next, a description will be given of application forms applicable to the child seat 10 of the above embodiment with reference to the drawings. Most configurations of each application form described below are similar to the child seat 10 according to the above embodiment. Then, the configurations of the child seat 10 according to the above embodiment is employed to the configurations other than distinctive configurations disclosed in the drawings illustrating each configuration. In the following application forms, the configuration of the rotation mechanism disposed between the mounting base 12 and the sitting seat 22 is mainly schematically indicated as the distinctive configuration of the respective application forms.

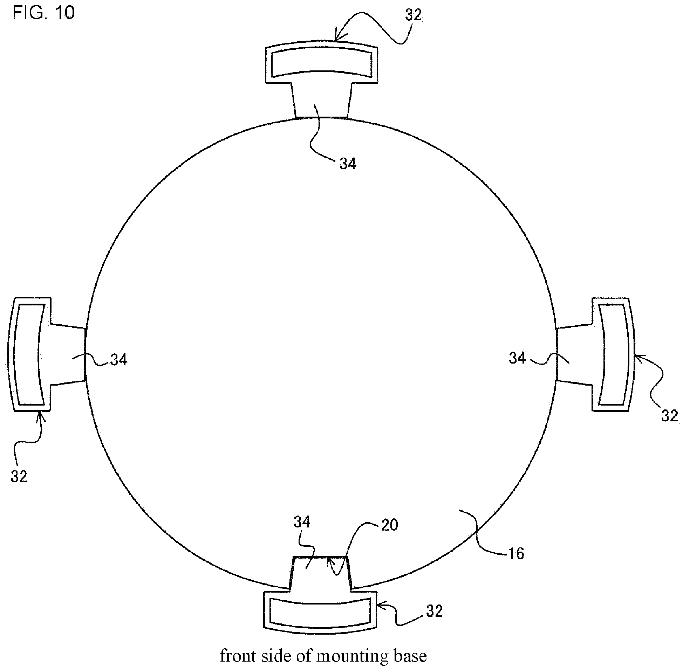

First, a first application form will be described with reference to FIG. 10. In this application form, the number of the operating unit 32 is four. When the four operating units 32 are disposed, an arrangement angle between the respective operating units 32 is preferably approximately 90 degrees. Disposing the operating units 32 in this formation applies the lock in every rotation of the sitting seat 22 by approximately 90 degrees. Even in this application form, in a state where the lock is applicable, the operating unit 32 to contribute to releasing the lock always positions forward the mounting base 12. The operation of releasing the lock and the operation to rotate the sitting seat 22 also can be performed simultaneously in one hand.

The above embodiment has described that the support surface 16 includes the cutout portions 16b, which notch the plan view form in a straight line, on the positions of approximately 90 degrees from the position where the depressed portion 20 is disposed to provide the temporary lock in rotating the sitting seat 22. However, in this application form, the configuration where the lock is applied every approximately 90 degrees eliminates a need for disposing the cutout portion 16b on the support surface 16.

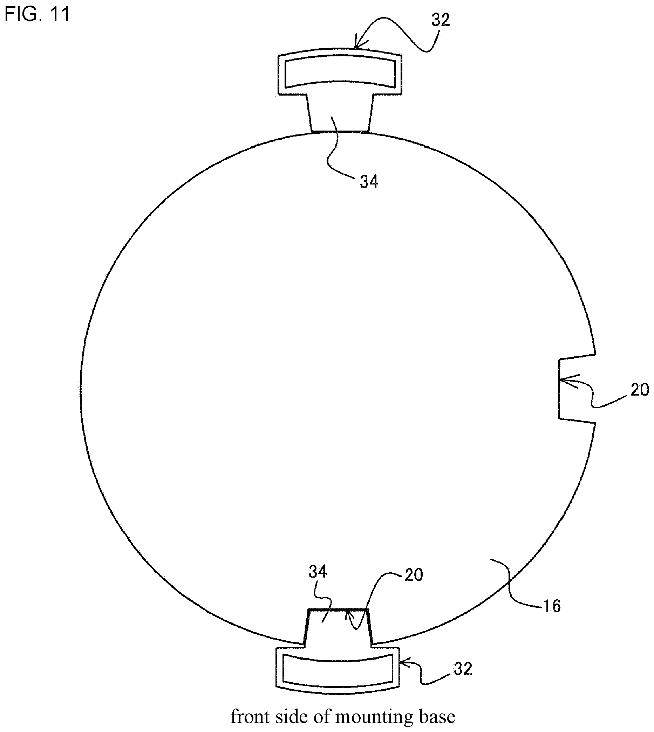

Next, a second application form will be described with reference to FIG. 11. In this application form, the number of the depressed portion 20 is two. When the number of the depressed portion 20 is increased, the arrangement angle is configured to be smaller than the arrangement angle of the operating unit 32. In this application form, the arrangement angle of the two operating units 32 is approximately 180 degrees, and the arrangement angle of the two depressed portions 20 is approximately 90 degrees (both arrangement angles have the center of the support surface 16 as the base point).

The arrangement positions of the depressed portions 20 are preferably disposed in a range of ±90 degrees with the position in the front side of the mounting base 12 as the base point. The arrangement positions of the depressed portions 20 are positions where the operating unit 32 applies the lock or releases the lock. Accordingly, disposing the depressed portions 20 in a range of ±90 degrees with the position in the front side of the mounting base 12 as the base point positions the operating unit 32, which performs the operation to release the lock, on the front side or a side surface side of the mounting base 12 to remove the possibility for decreasing the operability.

The configuration where the arrangement angle of the depressed portions 20 is smaller than the arrangement angle of the operating units 32 removes the possibility for generating a case where one operating unit 32 fits to the depressed portion 20 to lock the rotation of the sitting seat 22 during the other operating unit 32 releases the lock with the depressed portion 20 to perform the rotating operation of the sitting seat 22. Increasing the number of the depressed portion 20 ensures locking the rotation of the sitting seat 22 with any angle in rotating the sitting seat 22.

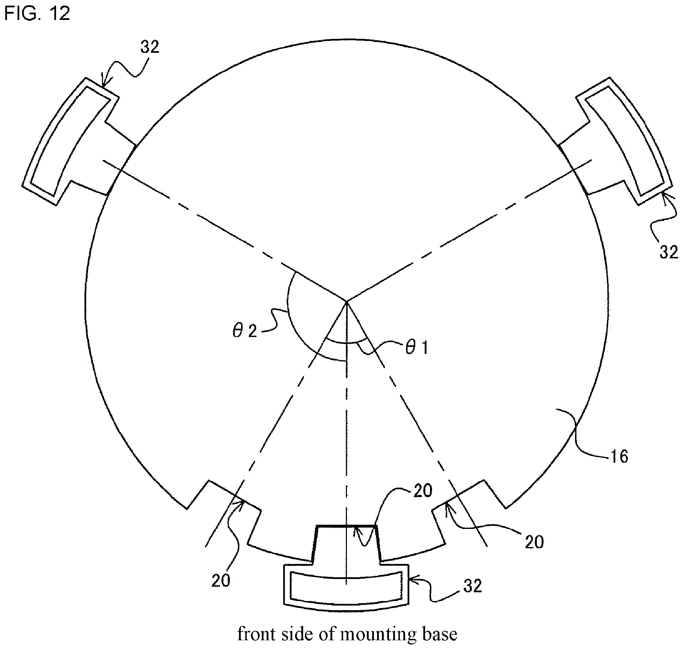

Next, a third application form will be described with reference to FIG. 12. In this application form, both the number of the depressed portion 20 and the number of the operating unit 32 are three. When the numbers of the depressed portion 20 and the operating unit 32 are increased to two or more, the depressed portions 20 and the operating units 32 are preferably disposed such that an angle θ1 between the two depressed portions 20 apart the most from one another is smaller than an arrangement angle θ2 of the two operating units 32 disposed adjacent to one another. This is for avoiding a case where one operating unit 32 fits to the depressed portion 20 to lock the rotation of the sitting seat 22 during the other operating unit 32 releases the lock with the depressed portion 20 to perform the rotating operation of the sitting seat 22.

In this application form, the respective arrangement angles of the depressed portions 20 adjacent to one another are approximately 30 degrees, and the respective arrangement angles of the operating units 32 adjacent to one another are approximately 120 degrees. Even in this application form, the effect similar to the above second application form can be provided.

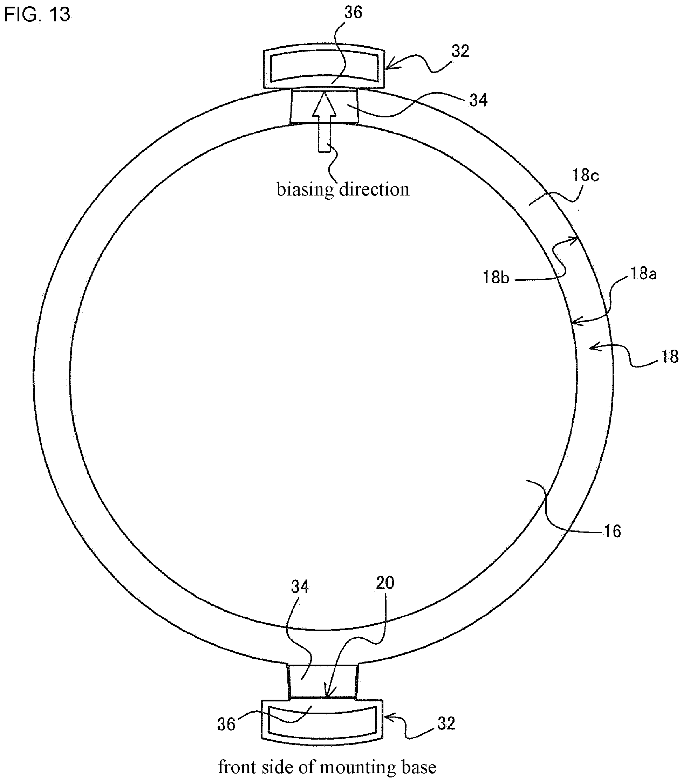

Next, a fourth application form will be described with reference to FIG. 13. This application form employs a configuration where the arrangement position of the depressed portion 20 and the biasing direction of the operating unit 32 are different. The above embodiment has employed the configuration where the locking unit 34 constituting the operating unit 32 is biased to the inner peripheral side wall surface 18a among the wall surfaces constituting the circumferential path 18. In contrast to this, this application form employs the configuration where the locking unit 34 is biased to the outer peripheral side wall surface 18b among the wall surfaces constituting the circumferential path 18. That is, the operating unit 32 is configured to include the biasing unit (not illustrated) such that the biasing force from the rotational center of the rotating plate 26 (see FIG. 7) toward a separating direction acts.

This application form employs the configuration where the depressed portion 20 is disposed on the outer peripheral side wall surface 18b. The arrangement position is preferably in the front side of the mounting base 12.

Thus, in this application form, having the biasing direction of the locking unit 34 in the direction of the outer peripheral side wall surface 18b constituting the circumferential path 18 fits the locking unit 34 to the depressed portion 20 disposed on the outer peripheral side wall surface 18b of the circumferential path 18 when the rotation of the sitting seat 22 is locked. Accordingly, when the lock of the sitting seat 22 is released, the unlocking unit 36 of the operating unit 32 is pushed into the direction of the rotational center of the rotating plate 26.

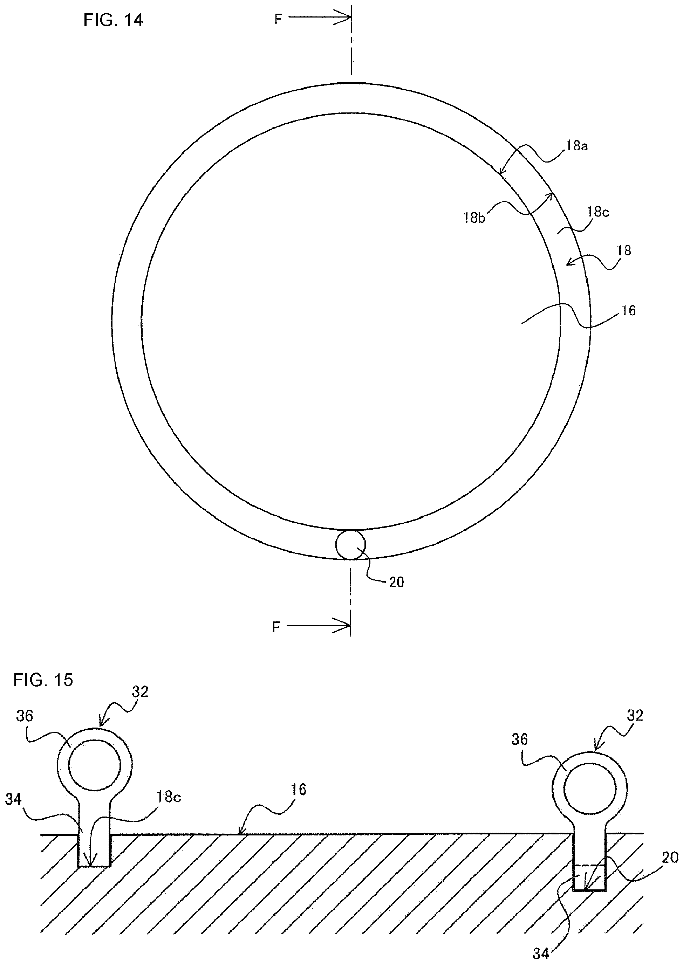

Next, a fifth application form will be described with reference to FIG. 14 and FIG. 15. FIG. 14 is a schematic diagram illustrating a plane configuration of the rotation mechanism, and FIG. 15 is a schematic diagram illustrating a cross section taken along a line F-F in FIG. 14. In this application form, the depressed portion 20 is configured on the bottom surface 18c among the wall surfaces constituting the circumferential path 18. In this configuration, the locking unit 34 of the operating unit 32 sliding along the groove-shaped circumferential path 18 falls into the depressed portion 20 to lock the rotation of the sitting seat 22.

In the case of this application form, it is enough to pull the unlocking unit 36 constituting the operating unit 32 upward in releasing the rotation lock of the sitting seat 22. This is because the operation pulls out the locking unit 34 fitting to the depressed portion 20.

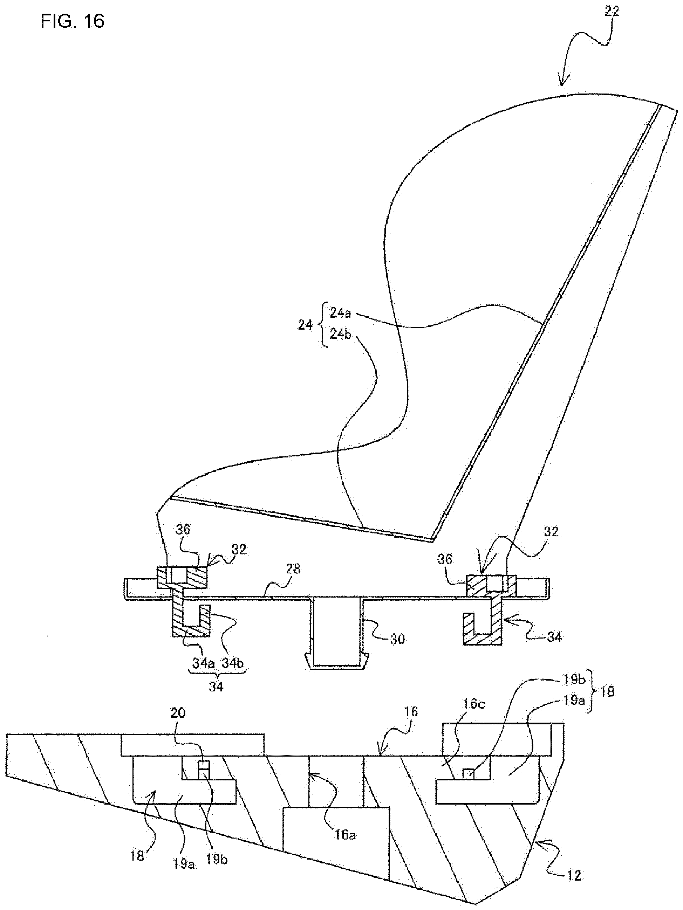

Next, a sixth application form will be described with reference to FIG. 16. Here, FIG. 16 is a drawing illustrating a cross-sectional structure (corresponding to the cross section taken along the line C-C in FIG. 3) of the child seat 10 according to this application form, and illustrates the sitting seat 22 and the mounting base 12 in a state of exploded for an easy description.

In this application form, the locking unit 34 of the operating unit 32 is formed in a hook shape including a main body 34a and a folded portion 34b, and the circumferential path 18 is formed in accordance with the shape of the locking unit 34. Here, in this application form, the main body 34a constituting the locking unit 34 has an L-shape including a hanging portion drooping from the plate body 28 to the mounting base 12 side, and a convex portion projecting toward the rotational center of the plate body 28. The folded portion 34b is a protrusion projecting from the convex portion of the main body 34a toward the unlocking unit 36 side parallel to the above hanging portion. As an exemplary specific shape of the circumferential path 18, the circumferential path 18 is constituted of an L-shaped groove 19a on which the main body 34a of the locking unit 34 surrounds and a ceiling groove 19b disposed on a ceiling 16c, which is configured by forming the L-shaped groove 19a, and the folded portion 34b surrounds on the ceiling groove 19b. Then, the depressed portion 20 to which the locking unit 34 fits is disposed on a position corresponding to the front side of the mounting base 12 on the ceiling groove 19b.

In this configuration, the operating unit 32 is biased to the ceiling 16c side where the depressed portion 20 is disposed. Then, when the operating unit 32 reaches the position where the depressed portion 20 is disposed on the ceiling groove 19b in accordance with the rotation of the sitting seat 22, the folded portion 34b of the locking unit 34 fits to the depressed portion 20. When the folded portion 34b fits to the depressed portion 20, the unlocking unit 36 of the operating unit 32 projects to the sheet body 24 side (upper side in the drawing) by the depth of the depressed portion 20 to lock the rotation of the sitting seat 22. In releasing the rotation lock of the sitting seat 22, it is enough to push the projecting unlocking unit 36 of the operating unit 32 into the plate body 28 side (lower side in the drawing). This operation removes the fitting of the folded portion 34b of the locking unit 34 and the depressed portion 20 to release the lock.

Even this configuration ensures operating the operating unit 32 in one hand and applying the force to rotate the sitting seat 22. Accordingly, the configuration can be considered as a part of the present invention. While the assembling seems to be difficult because the operating unit 32 and the mounting base 12 are indicated as one piece in FIG. 16, FIG. 16 schematically illustrates an exemplary application form, and a configuration where the components are dividable as necessary removes the problem on the assembling.

### DESCRIPTION OF REFERENCE NUMERAL

10: child seat, 12: mounting base, 14: rotating base, 16: support surface, 16a: bearing hole, 16b: cutout portion, 18: circumferential path, 18a: inner peripheral side wall surface, 18b: outer peripheral side wall surface, 18c: bottom surface, 20: depressed portion, 22: sitting seat, 24: sheet body, 24a: backrest portion, 24b: seating portion, 26: rotating plate, 28: plate body, 28a: opening, 30: rotation shaft, 30a: retainer, 32: operating unit, 34: locking unit, 36: unlocking unit.

## Claims

1. A child seat comprising:
a mounting base (12) to which a rotating base (14) is attached, the rotating base (14) including a circumferential path (18) and a depressed portion (20), the depressed portion (20) being disposed on at least a part of the circumferential path; and
a sitting seat (22) that includes a plurality of operating units (32), the plurality of operating units including a locking unit (34) configured to move along the circumferential path (18) and fit to the depressed portion (20), a biasing unit biasing the locking unit to a side of a surface (18a, 18b) forming the depressed portion, and an unlocking unit (36) coupled to the locking unit (34), the unlocking unit moving the locking unit to an opposite side of the biasing direction by the biasing unit to release the fitting of the locking unit (34) and the depressed portion (20), a rotating plate (26) being attached to the sitting seat (22), the rotating plate being rotatably assembled with respect to the rotating base (14).

2. The child seat according to claim 1, wherein:
the depressed portion (20) is disposed on a position corresponding to a front side of the mounting base (12) on the circumferential path (18), and
the plurality of the operating units (32) are disposed on at least a position corresponding to a front side and a position corresponding to a rear side of the sitting seat (22).

3. The child seat according to claim 2, wherein:
a plurality of the depressed portions (20) are radially disposed with a rotational center of the rotating plate (26) as a base point, and
an arrangement angle between the plurality of the depressed portions (20) with the rotational center as the base point is smaller than an arrangement angle of the operating units (32) with the rotational center as the base point.

4. The child seat according to any one of claims 1 to 3, wherein
the circumferential path (18) includes a wall surface (18a) on which a cutout portion (16b) to vary a sliding resistance of the locking unit is disposed.

## Patentansprüche

1. Kindersitz mit:
einer Befestigungsbasis (12), an der eine Drehbasis (14) befestigt ist, wobei die Drehbasis (14) eine umlaufende Bahn (18) und einen vertieften Abschnitt (20) aufweist, wobei der vertiefte Abschnitt (20) auf mindestens einem Teil der umlaufenden Bahn angeordnet ist; und
einem Sitz (22), der eine Mehrzahl von Bedienungseinheiten (32) aufweist, wobei die Mehrzahl von Bedienungseinheiten eine Verriegelungseinheit (34), die konfiguriert ist, um sich entlang der umlaufenden Bahn (18) zu bewegen und an den vertieften Abschnitt (20) zu passen, eine Vorspanneinheit, die die Verriegelungseinheit in Richtung einer Oberfläche (18a, 18b) vorspannt, die den vertieften Abschnitt bildet, und eine mit der Verriegelungseinheit (34) gekoppelte Entriegelungseinheit (36) aufweist, wobei die Entriegelungseinheit die Verriegelungseinheit in eine zur Vorspannrichtung der Vorspanneinheit entgegengesetzte Richtung bewegt, um die Passung der Verriegelungseinheit (34) und des vertieften Abschnitts (20) aufzuheben, wobei eine Drehplatte (26) an dem Sitz (22) angebracht ist, wobei die Drehplatte in Bezug auf die Drehbasis (14) drehbar angebracht ist.

2. Kindersitz nach Anspruch 1, bei dem:
der vertiefte Abschnitt (20) auf der umlaufenden Bahn (18) in einer Position angeordnet ist, die einer Vorderseite der Montagebasis (12) entspricht, und
die Mehrzahl von Bedienungseinheiten (32) an mindestens einer Position, die einer Vorderseite des Sitzes (22) entspricht, und einer Position, die einer Rückseite desselben entspricht, angeordnet sind.

3. Kindersitz nach Anspruch 2, bei dem:
mehrere der vertieften Abschnitte (20) mit einem Drehmittelpunkt der Drehplatte (26) als Basispunkt radial angeordnet sind, und
ein Anordnungswinkel zwischen den mehreren vertieften Abschnitten (20) mit dem Drehmittelpunkt als Basispunkt kleiner ist als ein Anordnungswinkel der Bedienungseinheiten (32) mit dem Drehmittelpunkt als Basispunkt.

4. Kindersitz nach einem der Ansprüche 1 bis 3, bei dem
die umlaufende Bahn (18) eine Wandfläche (18a) aufweist, auf der ein Ausschnittabschnitt (16b) zum Variieren eines Gleitwiderstands der Verriegelungseinheit angeordnet ist.

## Revendications

1. Siège pour enfant comprenant :
une base de montage (12) à laquelle est fixée une base rotative (14), la base rotative (14) comprenant un tracé circonférentiel (18) et une partie en creux (20), la partie en creux (20) étant disposée sur au moins une partie du tracé circonférentiel ; et
une assise (22) qui comprend une pluralité d'unités de commande (32), la pluralité d'unités de commande comprenant une unité de verrouillage (34) configurée pour se déplacer le long du tracé circonférentiel (18) et pour venir se loger dans la partie en creux (20), une unité de sollicitation sollicitant l'unité de verrouillage vers un côté d'une surface (18a, 18b) formant la partie en creux, et une unité de déverrouillage (36) couplée à l'unité de verrouillage (34), l'unité de déverrouillage déplaçant l'unité de verrouillage vers un côté opposé à la direction de sollicitation de l'unité de sollicitation pour relâcher le logement de l'unité de verrouillage (34) dans la partie enfoncée (20), une plaque rotative (26) étant fixée à l'assise (22), la plaque rotative étant assemblée de manière rotative par rapport à la base rotative (14).

2. Siège pour enfant selon la revendication 1, dans lequel :
la partie en creux (20) est disposée sur le tracé circonférentiel (18) dans une position correspondant à un côté avant de la base de montage (12), et
la pluralité d'unités de commande (32) sont disposées sur au moins une position correspondant à un côté avant et une position correspondant à un côté arrière de l'assise (22).

3. Siège pour enfant selon la revendication 2, dans lequel :
une pluralité de parties en creux (20) sont disposées radialement avec un centre de rotation de la plaque rotative (26) comme point de base, et
un angle de disposition entre la pluralité des parties en creux (20) avec le centre de rotation comme point de base est plus petit qu'un angle de disposition des unités de commande (32) avec le centre de rotation comme point de base.

4. Siège pour enfant selon l'une quelconque des revendications 1 à 3, dans lequel
le tracé circonférentiel (18) comprend une surface de paroi (18a) sur laquelle est disposée une partie en retrait (16b) destinée à faire varier la résistance au glissement de l'unité de verrouillage.
